# EUROPEAN PATENT APPLICATION

(11) **EP 2 410 526 A1**
(43) Date of publication of application: **25.01.2012**
(21) Application number: 10753438.0
(22) Date of filing: 10.03.2010
(51) Int. Cl.: G11B 7/26, G11B 7/24, G11B 7/243

(54) **PROCESS FOR PRODUCING OPTICAL RECORDING MEDIUM AND OPTICAL RECORDING MEDIUM**

(30) Priority: 17.03.2009 JP 2009064959
(71) Applicant: Sony Corporation, Tokyo 108-0075 (JP)
(72) Inventor: MIKI Takeshi, Tokyo 108-0075 (JP)
(74) Representative: Körber, Martin Hans
(86) International application number: PCT/JP2010/053957
(87) International publication number: WO 2010/106946

(57) **Abstract**

There is provided a method of manufacturing an optical recording medium capable of reducing a manufacturing cost of an optical recording medium. When manufacturing an optical recording medium 10 including a recording layer 2 formed on a substrate 1, and a light transmitting layer 3 formed on the recording layer 2, the method of manufacturing the optical recording medium includes a step of forming the recording layer 2 containing In and/or Sn, Pd, and oxygen through a use of sputtering method by using an In₂O₃ target and/or a SnO₂ target, and a Pd target while allowing an oxygen gas and a nitrogen gas to flow.

## Description

### TECHNICAL FIELD

The present invention relates to a method of manufacturing an optical recording medium and an optical recording medium manufactured by this manufacturing method, and is suitably used in a recordable optical recording medium.

### BACKGROUND ART

In a recordable optical disk using a red laser of the past, an organic dye has been used for a recording layer.
However, in a recordable optical disk using a blue laser, since an appropriate organic die to which the blue laser may be irradiated does not exist, it has been considered to use an inorganic material.

In the case of using Inorganic material, for the purpose of obtaining a sufficient reflectance, and emitting heat caused by laser irradiation, it has been proposed to form a recording layer of a multilayer film (for example, refer to Patent Literature 1).

### Prior art document

### Citation List

### Patent Literature

[PTL 1]: Japanese Unexamined Patent Publication No. 2007-157314

### SUMMARY OF INVENTION

However, when forming the recording layer of the multilayer film, the time for film-forming the multilayer film is necessary, and a costly film-forming device including several film-forming chambers is necessary.
Thus, the manufacturing cost of the optical disk is increased.

To solve the above-described issues, the present invention provides a method of manufacturing an optical recording medium capable of reducing a manufacturing cost of an optical recording medium, and an optical recording medium manufactured by this manufacturing method.

A first method of manufacturing an optical recording medium of the present invention is a method of manufacturing an optical recording medium including a recording layer formed on a substrate, and a light transmitting layer formed on the recording layer. And, the method of manufacturing the optical recording medium includes a step of forming the recording layer containing In and/or Sn, Pd, and oxygen through a use of sputtering method by using an In₂O₃ target and/or a SnO₂ target, and a Pd target while allowing an oxygen gas and a nitrogen gas to flow.

According to the above-mentioned first method of manufacturing the optical recording medium of the present invention, a bonding state of Pd and oxygen in the recording layer containing In and/or Sn, Pd, and oxygen is controllable by allowing the nitrogen gas to flow in addition to the oxygen gas in the step of forming the recording layer through the use of sputtering method. Thereby, it is possible to control transmittance and reflectance of the recording layer to be predetermined values. In particular, it is possible to set the transmittance of the recording layer to be high, and the reflectance to be low.

A second method of manufacturing an optical recording medium of the present invention is a method of manufacturing an optical recording medium including two or more recording layers formed on a substrate, an intermediate layer formed between each of the recording layers, and a light transmitting layer formed on the two or more recording layers. And, when forming at least the recording layer arranged closest to the light transmitting layer in the two or more recording layers, the recording layer is formed through a use of sputtering method by using an In₂O₃ target and/or a SnO₂ target, and a Pd target while allowing an oxygen gas and a nitrogen gas to flow. In this manner, the recording layer containing In and/or Sn, Pd, and oxygen is formed.

According to the above-mentioned second method of manufacturing the optical recording medium of the present invention, when forming at least the recording layer arranged closest to the light transmitting layer in the two or more recording layers, a bonding state of Pd, and oxygen in this recording layer is controllable by allowing the nitrogen gas to flow in addition to the oxygen gas. Thereby, it is possible to control transmittance and reflectance of this recording layer to be predetermined values, and, in particular, it is possible to set the transmittance to be high and the reflectance to be low in the recording layer arranged closest to the light transmitting layer, in which it is preferable to set the transmittance to be high and the reflectance to be low.

An optical recording medium according to an embodiment of the present invention includes: a substrate; a recording layer formed on the substrate, containing In and/or Sn, Pd, and oxygen, and having an oxygen content higher than a stoichiometric composition of the case where In and/or Sn are completely oxidized; and a light transmitting layer formed on the recording layer.

According to a structure of the above-mentioned optical recording medium according to the embodiment of the present invention, the recording layer containing In and/or Sn, Pd, and oxygen has the oxygen content higher than the stoichiometric composition of the case where In and/or Sn are completely oxidized. Thereby, oxygen atoms are bonded to at least some of Pd atoms, a bonding state of Pd and oxygen is controllable based on the oxygen content or the like, and it is possible to control transmittance and reflectance of the recording layer to be predetermined values.
Also, the recording layer containing In and/or Sn, Pd, and oxygen may be composed of only one layer, and it is possible to reduce the number of layers constituting the recording layer in comparison with the case where a multilayer film made of an inorganic material is adopted as the recording layer.

According to the method of manufacturing the optical recording medium according to the present invention, it is possible to control the transmittance and the reflectance of the recording layer to be the predetermined values. In particular, it is possible to set the transmittance of the recording layer to be high, and the reflectance to be low.
Also, according to the optical recording medium according to the present invention, the bonding state of Pd and oxygen is contollable based on the oxygen content or the like, and it is possible to control the transmittance and the reflectance of the recording layer to be the predetermined values.
Therefore, with the present invention, it is possible to realize the optical recording medium having favorable recording characteristics by optimizing the transmittance and the reflectance of the recording layer.

And, in the present invention, since the recording layer containing In and/or Sn, Pd, and oxygen is formed, it is possible to constitute the recording layer of only one layer, and thus it is possible to reduce the manufacturing cost of the optical recording medium by reducing the number of layers constituting the recording layer.

### BRIEF DESCRIPTION OF DRAWINGS

[Fig. 1] FIG. 1 is a schematic structural view (cross-sectional view) of a first embodiment of an optical recording medium of Invention.
[Fig. 2] FIG. 2 is a schematic structural view (cross-sectional view) of a second embodiment of the optical recording medium of Invention.
[Fig. 3] FIG. 3 is a schematic structural view (cross-sectional view) of a modification of the second embodiment of the optical recording medium of Invention.
[Fig. 4] FIG. 4 is a view illustrating changes of a reflectance R and a transmittance T of the recording layer based on a flow rate of oxygen.
[Fig. 5] FIG. 5 is a view illustrating changes of the reflectance R and the transmittance T based on a flow rate of nitrogen.

### DESCRIPTION OF EMBODIMENTS

Hereinafter, a description will be made in detail on the best mode (hereinafter, referred to as an embodiment) for carrying out Invention.
In addition, the description will be made in the following order.
1. Outline of Invention
2. First embodiment
3. Second embodiment
4. Modification
5. Experimental examples

### <1. Outline of Invention>

A method of manufacturing an optical recording medium of Invention has a feature in a step of forming a recording layer when manufacturing the optical recording medium including the recording layer formed on a substrate, and a light transmitting layer formed on the recording layer. And, in this step of forming the recording layer, the recording layer containing In and/or Sn, Pd, and oxygen is formed through the use of sputtering method by using an In₂O₃ target and/or a SnO₂ target, and a Pd target while allowing an oxygen gas and a nitrogen gas to flow.

Also, another method of manufacturing an optical recording medium of Invention is a method of manufacturing the optical recording medium including two or more recording layers formed on a substrate, an intermediate layer formed between each of the recording layers, and a light transmitting layer formed on the two or more recording layers. And, another method of manufacturing the optical recording medium has a feature in a method of forming at least the recording layer arranged closest to the light transmitting layer in the two or more recording layers.
At the time of forming at least the recording layer arranged closest to the light transmitting layer, the recording layer is formed through the use of sputtering method by using In₂O₃ target and/or SnO₂ target, and Pd target while allowing the oxygen gas and the nitrogen gas to flow. In this manner, the recording layer containing In and/or Sn, Pd, and oxygen is formed.

The optical recording medium of Invention is an optical recording medium manufactured by the above-described manufacturing method, and includes the substrate, the recording layer formed on the substrate, and the light transmitting layer formed on the recording layer. The recording layer contains In and/or Sn, Pd, and oxygen, and has the oxygen content higher than a stoichiometric composition of the case where In and/or Sn are completely oxidized.

In the optical recording medium of Invention, for example, a substrate material typically used for an optical recording medium such as an optical disk may be used for the material of the substrate. Specifically, a polycarbonate resin or the like may be cited.

In the optical recording medium of Invention, the light transmitting layer is a so-called cover layer.
At the time of recording information and reading information, laser light is irradiated from this light transmitting layer (cover layer) side to the recording layer.
As the material for the light transmitting layer, for example, a UV resin (ultraviolet curing resin) cured by ultraviolet irradiation may be used.
After the UV resin (ultraviolet curing resin) is applied, the light transmitting layer may be formed by curing the UV resin with the ultraviolet irradiation.

In the optical recording medium of Invention, the recording layer contains In and/or Sn, Pd, and oxygen. That is, it is considered that the structure of the recording layer may be three types of (1) the structure containing In, Pd, and oxygen, (2) the structure containing Sn, Pd, and oxygen, and (3) the structure containing In, Sn, Pd, and oxygen. The content of each component of In and/or Sn, Pd, and oxygen is not specifically limited, but may be an arbitrary content.

The content of each component of the recording layer is controllable by changing materials and conditions in the method of forming the recording layer. In the case where the recording layer is formed through the use of sputtering method, the content of each component of the recording layer is controllable by changing the composition of the used target, the amount of electricity applied to each target, and the conditions such as the type and the flow rate of a gas flowing when forming the recording layer.

Since the recording layer in the optical recording medium of Invention contains In and/or Sn, Pd, and oxygen, by irradiating laser light or the like, it is possible to change the reflectance of an irradiated portion. Thereby, since the portion in which the reflectance is changed, and the reflectance is different from those of surroundings may be formed as a recording mark, it is possible to record information on the recording layer.

Also, the recording layer in the optical recording medium of Invention has the oxygen content higher than the stoichiometric composition of the case where In and/or Sn are completely oxidized. Thereby, oxygen atoms are bonded to at least some of Pd atoms in Pd atoms contained in the recording layer. And, since the bonding state of Pd and oxygen is controllable based on the oxygen content or the like, it is possible to control the transmittance and the reflectance of the recording layer to be predetermined values by controlling the bonding state of Pd and oxygen.
At this time, in Pd atoms in the recording layer, there are three states of the single Pd atom existed without bonded to the oxygen atom (Pd), Pd atom bonded to one oxygen atom (PdO), and Pd atom bonded to two oxygen atoms (PdO₂). And, among these, one to three states are existed based on the oxygen content.
When the ratio of the of Pd atoms which are not bonded to the oxygen atoms is high, since the metallic characteristics become strong, the transmittance of the recording layer is reduced, and the reflectance of the recording layer is increased. Meanwhile, when the ratio of Pd atoms bonded to the oxygen atoms is high, since the oxide characteristics becomes strong, the transmittance of the recording layer is increased, and the reflectance of the recording layer is reduced.

When the oxygen gas is allowed to flow at the time of forming the recording layer containing In and/or Sn, Pd, and oxygen through the use of sputtering method, the oxygen content in the recording layer to be formed is controllable based on the flow rate of the oxygen gas. Thereby, it is possible to control the bonding state of Pd and oxygen in the recording layer.
However, in the case where only the oxygen gas, or only the oxygen gas and an Ar gas are used, although it is possible to increase the transmittance of the recording layer by controlling the bonding state of Pd and oxygen in the recording layer, it is difficult to reduce the reflectance of the recording layer to be lower than a certain level (for example, 10%).
Meanwhile, like the manufacturing method of Invention, by allowing the nitrogen gas to flow in addition to the oxygen gas, it is possible to not only increase the transmittance of the recording layer, but also reduce the reflectance of the recording layer to be lower than the certain level (for example, 10%) by controlling the bonding state of Pd and oxygen in the recording layer. In the case where the nitrogen gas is allowed to flow in addition to the oxygen gas, there is seen a tendency that the number of Pd atom bonded to one oxygen atom (PdO) becomes larger than the number of Pd atom bonded to two oxygen atoms (PdO₂).

Also, the flow rate of the oxygen gas and the nitrogen gas may be set to the arbitrary amount, but it is more preferable to set the flow rate of the oxygen gas to be within a range from 10 sccm to 100 sccm both inclusive, and to set the flow rate of the nitrogen gas to be within a range from 2 sccm to 50 sccm both inclusive.

In the case where it is considered to increase capacity of the optical recording medium, when the two (Dual) recording layers are formed, the capacity is naturally doubled. In the optical disk of the present time, the recording capacity in the case of a one-layer structure is 25 GB, and the recording capacity in the case of a two-layer structure is 50 GB.
To realize the multilayer optical recording medium in which the two or more recording layers are formed, it is extremely important to control the reflectance and the transmittance of the recording layer arranged closest to the light incidence side, that is, arranged closest to the light transmitting layer. By controlling the reflectance and the transmittance of this recording layer, it is possible to perform favorable recording on other recording layers on the substrate side.
And, in the case where the two or more recording layers are formed, the optical recording medium further includes other one or more recording layers formed between the substrate and the recording layer containing In, and/or Sn, Pd, and oxygen, and Intermediate layer formed between each of the recording layers.

In another method of manufacturing the optical recording medium of Invention, at the time of forming at least the recording layer arranged closest to the light transmitting layer in the two or more recording layers, the recording layer containing In and/or Sn, Pd, and oxygen is formed through the use of sputtering method while allowing the oxygen gas and the nitrogen gas to flow.
Thereby, it is possible to control the transmittance and the reflectance of this recording layer to be the predetermined values. In particular, in this recording layer arranged closest to the light transmitting layer, it is preferable to set the transmittance to be high and the reflectance to be low, and it is possible to control the transmittance to be high and the reflectance to be low by forming the recording layer while allowing the oxygen gas and the nitrogen gas to flow.

In addition, in the two or more recording layers, the structure, and the forming method of the other one or more recording layers which are other than the recording layer arranged closest to the light transmitting layer are not specifically limited.
Like the recording layer arranged closest to the light transmitting layer, the other recording layer may be formed as a recording layer containing In and/or Sn, Pd, and oxygen, or as a recording layer made of completely different materials and having completely different recording methods with no preference.
Like the recording layer arranged closest to the light transmitting layer, in the case where the other recording layer is formed as a recording layer containing In and/or Sn, Pd, and oxygen, it is possible to increase the recording capacity in recordable recording.
Also, in the case where the other recording layer is formed as a recording layer containing In and/or Sn, Pd, and oxygen, the recording layer may be formed by allowing oxygen gas to flow but without allowing the nitrogen gas to flow, or by allowing the oxygen gas and the nitrogen gas to flow with no preference. Further, in the case where the oxygen gas and the nitrogen gas are allowed to flow, by changing the flow rate of each gas between the recording layer arranged closest to the light transmitting layer and the other recording layers, it is also possible to change the transmittance and the reflectance in each recording layer.

In Invention, in particular, the recording layer containing In and/or Sn, Pd, and oxygen is suitably used as a recording layer performing the recordable recording in which the recording is performed only once.

Also, this recording layer containing In and/or Sn, Pd, and oxygen may be composed of only one layer, and it is possible to reduce the number of layers constituting the recording layer in comparison with the case where a multilayer film of an inorganic material is adopted as the recording layer. Thereby, it is possible to constitute the optical recording medium at a low cost by reducing the material cost and the manufacturing cost of the optical recording medium.

Although the optical recording medium of Invention may be formed in a disk shape which is adopted in a typical optical recording medium, it is also possible to form the optical recording medium in other shapes such as a card shape.

### <2. First embodiment>

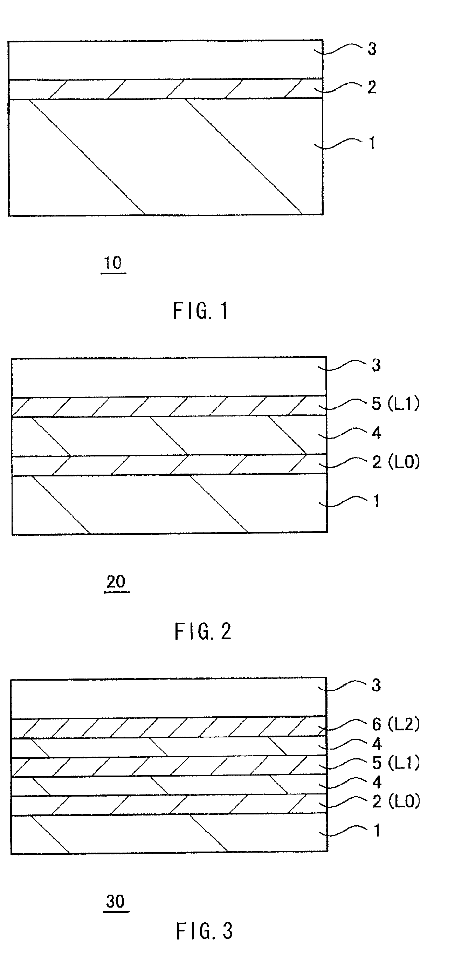

The schematic structural view (cross-sectional view) of the optical recording medium of a first embodiment of Invention is illustrated in FIG. 1.
In an optical recording medium 10, a recording layer 2 for recording information is formed on a substrate 1, and a light transmitting layer 3 is formed on the recording layer 2.

The optical recording medium 10 may be formed in the disk shape like the shape of an optical disk of the past. Also, to the optical recording medium 10, it is possible to adopt other shapes such as the card shape.

As a material for the substrate 1, for example, the polycarbonate resin may be used.
As a material for the light transmitting layer (so-called cover layer) 3, for example, a UV resin (ultraviolet curing resin) cured by the ultraviolet irradiation may be used.

In the optical recording medium 10 of Invention, in particular, the recording layer 2 contains In and/or Sn, Pd, and oxygen, and has the oxygen content higher than the stoichiometric composition of the case where In and/or Sn are completely oxidized.

The structure of the recording layer 2 may be one of the three types of (1) the structure containing In, Pd, and oxygen, (2) the structure containing Sn, Pd, and oxygen, and (3) the structure containing In, Sn, Pd, and oxygen which have been described above.
Such a recording layer 2 may be formed, for example, through the use of sputtering method by using In₂O₃ target and/or SnO₂ target, and Pd target while allowing the oxygen gas and the nitrogen gas to flow.
Also, since the recording layer 2 has the oxygen content higher than the stoichiometric composition of the case where In and/or Sn are completely oxidized, the oxygen atoms are bonded to at least some of Pd atoms in Pd atoms contained in the recording layer 2.
Since the bonding state of Pd and oxygen is controllable based on this oxygen content or the like, it is possible to control the transmittance and the reflectance of the recording layer 2 to be the predetermined values by controlling the bonding state of Pd and oxygen.

The optical recording medium 10 of this embodiment may be manufactured, for example, as follows.
First, for example, the substrate 1 made of the polycarbonate resin is prepared. In the case where the optical recording medium 10 is formed, for example, in the disk shape, the substrate 1 in which grooves for tracking are formed on the surface is manufactured.
Next, on the substrate 1, the recording layer 2 containing In and/or Sn, Pd, and oxygen is formed through the use of sputtering method by using In₂O₃ target and/or SnO₂ target, and Pd target while allowing the oxygen gas and the nitrogen gas to flow.
Next, on the recording layer 2, the UV resin (ultraviolet curing resin) is applied. After that, by curing the UV resin with the ultraviolet irradiation, the light transmitting layer 3 may be formed.
In this manner, the optical recording medium 10 illustrated in FIG. 1 may be manufactured.

According to the optical recording medium 10 of this embodiment, the recording layer 2 has the oxygen content higher than the stoichiometric composition of the case where In and/or Sn are completely oxidized. Thereby, the oxygen atoms are bonded to at least some of Pd atoms in Pd atoms contained in the recording layer 2. And, since the bonding state of Pd and oxygen is controllable based on the oxygen content or the like, it is possible to control the transmittance and the reflectance of the recording layer 2 to be the predetermined values by controlling the bonding state of Pd and oxygen.

Also, in the recording layer 2 containing In and/or Sn, Pd, and oxygen, the recording layer 2 may be composed of only one layer, and it is possible to reduce the number of layers constituting the recording layer 2 in comparison with the case where the multilayer film made of Inorganic material is adopted as the recording layer. Thereby, it is possible to constitute the optical recording medium 10 at the low cost by reducing the material cost and the manufacturing cost of the optical recording medium 10.

According to the above-described method of manufacturing the optical recording medium 10 of this embodiment, the recording layer 2 containing In and/or Sn, Pd, and oxygen is formed through the use of sputtering method while allowing the oxygen gas and the nitrogen gas to flow.
In this manner, by allowing the nitrogen gas to flow in addition to the oxygen gas, it is possible to control the bonding state of Pd and oxygen in the recording layer 2. Thereby, it is possible to control the transmittance and the reflectance of the recording layer 2 to be the predetermined values. In particular, it is possible to set the transmittance to be high and the reflectance to be low in the recording layer 2.

Therefore, by this embodiment, the optical recording medium 10 which has favorable recording characteristics may be realized by optimizing the transmittance and the reflectance of the recording layer 2.

Although the above-described optical recording medium 10 of this embodiment is composed of the substrate 1, the recording layer 2, and the light transmitting layer 3, in Invention, the optical recording medium may include other layers within a range that the cost of the optical recording medium is not highly increased.

### <3. Second embodiment>

The schematic structural view (cross-sectional view) of the optical recording medium of a second embodiment of Invention will be illustrated in FIG. 2.
In an optical recording medium 20, two recording layers 2 and 5 are formed between the substrate 1 and the light transmitting layer 3. An intermediate layer 4 is formed between the two recording layers 2 and 5.
The structure of the other part is the same as the optical recording medium 10 of the first embodiment illustrated in FIG. 1.

In the two recording layers, the recording layer 5 as being the upper layer arranged closest to the light incidence side, that is, arranged closest to the light transmitting layer 3 is an L1 layer, and the recording layer 2 as being the lower layer is an L0 layer.

As the material for the substrate 1 and the light transmitting layer 3, the same materials as the optical recording medium 10 of the first embodiment may be used.
As the material for Intermediate layer 4, a material having a high transmittance of laser light with which the recording on the recording layers 2 and 5 is performed is used. For example, it is possible to use the UV resin (ultraviolet curing resin) cured by the ultraviolet irradiation.

In the optical recording medium 20 of this embodiment, in particular, the recording layer (L1 layer) 5 arranged closest to the light transmitting layer 3 contains In and/or Sn, Pd, and oxygen, and has the oxygen content higher than the stoichiometric composition of the case where In and/or Sn are completely oxidized.
Thereby, the structure of the recording layer (L1 layer) 5 may be one of the three types of (1) the structure containing In, Pd, and oxygen, (2) the structure containing Sn, Pd, and oxygen, and (3) the structure containing In, Sn, Pd, and oxygen which have been described above.
The recording layer (L1 layer) 5 may be formed, for example, through the use of sputtering method by using In₂O₃ target and/or SnO₂ target, and Pd target while allowing the oxygen gas and the nitrogen gas to flow.
Also, since the bonding state of Pd and oxygen is controllable based on the oxygen content or the like in the recording layer (L1 layer) 5, it is possible to control the transmittance and the reflectance of the recording layer (L1 layer) 5 to be the predetermined values by controlling the bonding state of Pd and oxygen.

In addition, the structure of the recording layer (L0 layer) 2 as being the lower layer is not specifically limited.
Like the recording layer (L1 layer) 5 as being the upper layer, the recording layer (L0 layer) 2 may be formed as the recording layer containing In and/or Sn, Pd, and oxygen, or the recording layer made of completely different materials, and having completely different recording methods with no preference.
Like the recording layer (L1 layer) 5 as being the upper layer, in the case where the recording layer (L0 layer) 2 as being the lower layer is formed as the recording layer containing In and/or Sn, Pd, and oxygen, it is possible to double the recording capacity in the recordable recording.
In the case where the recording layer (L0 layer) 2 as being the lower layer is formed as the recording layer having the recording method completely different from that of the recording layer (L1 layer) 5 as being the upper layer (for example, a reproduction-dedicated recording layer, and a rewritable recording layer), different functions may be realized in the two recording layers 2 and 5.

The optical recording medium 20 of this embodiment may be manufactured, for example, as follows .
First, for example, the substrate 1 made of the polycarbonate resin is prepared. In the case where the optical recording medium 10 is formed, for example, in the disk shape, the substrate 1 in which grooves for tracking are formed on the surface is manufactured.
Next, on the substrate 1, the recording layer (L0 layer) 2 as being the lower layer is formed through the use of sputtering method.
Next, on the recording layer (L0 layer) 2, the UV resin (ultraviolet curing resin) is applied. After that, by curing the UV resin with the ultraviolet irradiation, Intermediate layer 4 may be formed.
Next, on Intermediate layer 4, the recording layer (L1 layer) 5 as being the upper layer containing In and/or Sn, Pd, and oxygen is formed through the use of sputtering method by using In₂O₃ target and/or SnO₂ target, and Pd target while allowing the oxygen gas and the nitrogen gas to flow.
Next, on the recording layer (L1 layer) 5, the UV resin (ultraviolet curing resin) is applied. After that, by curing the UV resin with the ultraviolet irradiation, the light transmitting layer 3 may be formed.
In this manner, the optical recording medium 20 illustrated in FIG. 2 may be manufactured.

Here, in the case where the recording layer (L0 layer) 2 as being the lower layer is formed as the recording layer containing In and/or Sn, Pd, and oxygen, the recording layer (L0 layer) 2 may be formed by allowing oxygen gas to flow but without allowing the nitrogen gas to flow, or by allowing the oxygen gas and the nitrogen gas to flow with no preference.
Further, in the case where the L0 layer 2 is formed by allowing the oxygen gas and the nitrogen gas to flow, by changing the flow rate of each gas between the L0 layer 2 and the L1 layer 5, it is also possible to change the transmittance and the reflectance in each of the recording layers 2 and 5.

According to the above-described optical recording medium 20 of this embodiment, the recording layer (L1 layer) 5 has the oxygen content higher than the stoichiometric composition of the case where In and/or Sn are completely oxidized. Thereby, the oxygen atoms are bonded to at least some of Pd atoms in Pd atoms contained in the recording layer (L1 layer) 5. And, since the bonding state of Pd and oxygen is controllable based on the oxygen content or the like, it is possible to control the transmittance and the reflectance of the recording layer (L1 layer) 5 to be the predetermined values by controlling the bonding state of Pd and oxygen.

Also, in the recording layer (L1 layer) 5 containing In and/or Sn, Pd, and oxygen, the recording layer 5 may be composed of only one layer, and it is possible to reduce the number of layers constituting the recording layer 5 in comparison with the case where the multilayer film made of Inorganic material is adopted as the recording layer. Thereby, it is possible to constitute the optical recording medium 20 at the low cost by reducing the material cost and the manufacturing cost of the optical recording medium 20. In the case where the recording layer (L0 layer) 2 as being the lower layer also contains In and/or Sn, Pd, and oxygen, since it is possible to reduce the number of layers constituting the two recording layers 2 and 5, it is possible to further reduce the material cost and the manufacturing cost of the optical recording medium 20.

According to the method of manufacturing the optical recording medium 20 of this embodiment, the recording layer (L1 layer) 5 containing In and/or Sn, Pd, and oxygen is formed through the use of sputtering method while allowing the oxygen gas and the nitrogen gas to flow.
In this manner, by allowing the nitrogen gas to flow in addition to the oxygen gas, it is possible to control the bonding state of Pd and oxygen in the recording layer (L1 layer) 5. Thereby, it is possible to control the transmittance and the reflectance of the recording layer (L1 layer) 5 to be the predetermined values. In particular, it is possible to control the transmittance to be high and the reflectance to be low in the recording layer (L1 layer) 5 in which it is preferable to set the transmittance to be high and the reflectance to be low.

Therefore, by this embodiment, in particular, it is possible to optimize the transmittance and the reflectance of the recording layer 5 to be the L1 layer, and it is possible to realize the optical recording medium 20 including the two recording layers 2 and 5, and having favorable recording characteristics.

Although the above-described optical recording medium 20 of this embodiment is composed of five layers of the substrate 1, the recording layer 2, Intermediate layer 4, the recording layer 5, and the light transmitting layer 3, in Invention, the optical recording medium may include other layers within a range that the cost of the optical recording medium is not highly increased.

### <4. Modification>

Although the structure including the two recording layers is employed in the second embodiment, the structure including the three or more recording layers may be employed in Invention.
As the modification of the second embodiment, FIG. 3 illustrates the cross-sectional view of the optical recording medium having the structure which includes three recording layers.
As illustrated in FIG. 3, in an optical recording medium 30, three recording layers 2, 5, and 6 are formed between the substrate 1 and the light transmitting layer 3. Intermediate layer 4 is formed between each of the three recording layers 2, 5, and 6. In the three recording layers 2, 5, and 6, the recording layer 6 as being the uppermost layer arranged closest to the light transmitting layer 3 is an L2 layer, the recording layer 5 in the middle is the L1 layer, and the recording layer 2 as being the lowermost layer is the L0 layer.
In the case of this structure, in the same manner as the recording layer (L1 layer) 5 described in the second embodiment, the structure and the manufacturing method of Invention may be applied at least to the recording layer 6 as being the uppermost layer, which is to be the L2 layer.

### <5. Experimental examples>

### [Experiment 1. Changes of reflectance and transmittance of recording layer based on flow rate of oxygen gas]

The optical recording medium was actually manufactured, and the reflectance and the transmittance of the recording layers were investigated.
First, each of the recording layers was formed while changing the flow rate of the oxygen gas, and the changes of the reflectance and the transmittance of the recording layers were investigated.

### (Sample 1)

The optical recording medium 10 of FIG. 1 was manufactured as follows.
As the substrate 1, a disk-shaped polycarbonate resin having a thickness of 1.1 mm was prepared.
Next, on this substrate 1, an In-Sn-Pd-O film having a film-thickness of 40 nm was formed as the recording layer 2 through the use of sputtering method. At that time, three targets of In₂O₃, SnO₂, and Pd were used as the targets. Also, by setting the flow rate of the argon gas to be 70 sccm and the flow rate of the oxygen gas to be 30 sccm while allowing each of the gases to flow, sputtering was performed by controlling the sputtering power of each target to adjust the composition. The composition was adjusted as In₂O₃ : SnO₂ = 9 : 1, (In₂O₃ + SnO₂) : Pd = 8 : 2. In this manner, the single-layered recording layer 2 of In-Sn-Pd-O film was formed.
Further, the light transmitting layer 3 having a thickness of 100 µm was formed by applying an ultraviolet curing resin on the recording layer 2 to cure the recording layer 2 by the ultraviolet irradiation, and the optical recording medium 10 having the disk shape, and the cross-sectional structure illustrated in FIG. 1 was manufactured. This was regarded as a sample 1 of the optical recording medium 10.

### (Sample 2)

By setting the flow rate of the argon gas to be 60 sccm, the flow rate of oxygen gas to be 40 sccm, and the rest to be the same as the sample 1, the optical recording medium 10 having the structure illustrated in FIG. 1 was manufactured. This was regarded as a sample 2 of the optical recording medium 10.

### (Sample 3)

By setting the flow rate of the argon gas to be 50 sccm, the flow rate of the oxygen gas to be 50 sccm, and the rest to be the same as the sample 1, the optical recording medium 10 having the structure illustrated in FIG. 1 was manufactured. This was regarded as a sample 3 of the optical recording medium 10.

### (Measurement of reflectance and transmittance)

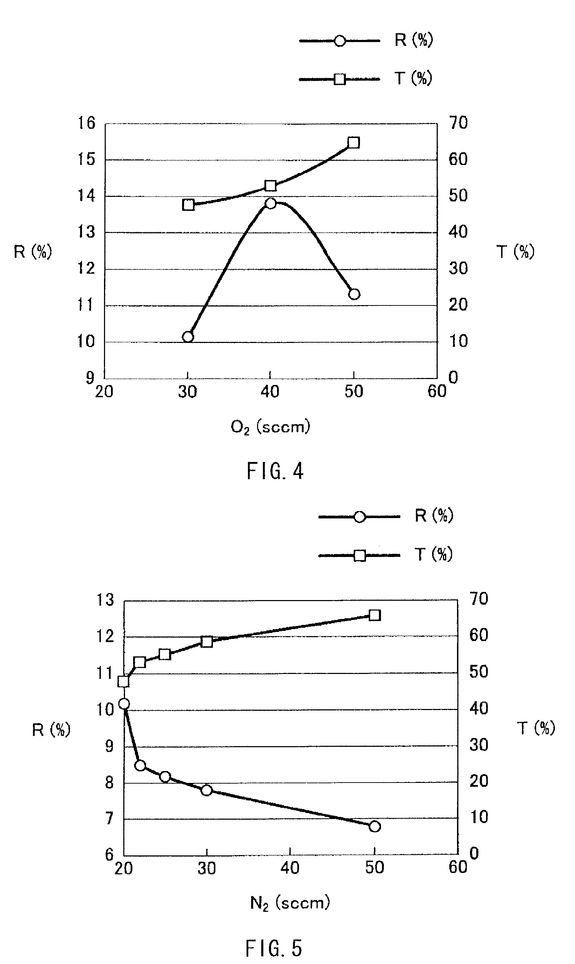

Laser light was irradiated to each sample of the manufactured sample 1 to the manufactured sample 3, and the reflectance and the transmittance of each recording layer 2 were measured.
The changes of the reflectance R and the transmittance T of the recording layer 2 based on the flow rate of the oxygen gas (30 sccm to 50 sccm) when forming the recording layer 2 are indicated in FIG. 4 as measurement results.

From FIG. 4, it can be seen that the recording layer 2 becomes transparent, and it is possible to increase the transmittance T, as the flow rate of the oxygen gas (02) is increased.
Meanwhile, the reflectance R is 10% or more, and it can be seen that it is not possible to reduce the reflectance to be less than 10%.
In this manner, in In-Sn-Pd-O film, it could be seen that the transmittance T was controllable by controlling the flow rate of the oxygen gas at the time of forming the film, but it was difficult to control the reflectance R.

### [Experiment 2. Changes of reflectance and transmittance of recording layer based on flow rate of nitrogen gas]

Next, the recording layer was formed by allowing the nitrogen gas to flow in addition to the oxygen gas, and the changes of the reflectance and the transmittance of the recording layer caused by the change of the flow rate of the nitrogen gas were investigated.

### (Sample 4; Example)

By setting the flow rate of the argon gas to be 70 sccm, the flow rate of the oxygen gas to be 30 sccm, and the flow rate of the nitrogen gas to be 2 sccm while allowing each of the gases to flow, sputtering was performed by controlling the sputtering power of each target to adjust the composition. The rest was set to be the same as the sample 1, and the optical recording medium 10 having the structure illustrated in FIG. 1 was manufactured. This was regarded as a sample 4 of the optical recording medium 10.

### (Sample 5; Example)

By setting the flow rate of the nitrogen gas to be 5 sccm, and the rest to be the same as the sample 4, the optical recording medium 10 having the structure illustrated in FIG. 1 was manufactured. This was regarded as a sample 5 of the optical recording medium 10.

### (Sample 6; Example)

By setting the flow rate of the nitrogen gas to be 10 sccm, and the rest to be the same as the sample 4, the optical recording medium 10 having the structure illustrated in FIG. 1 was manufactured. This was regarded as a sample 6 of the optical recording medium 10.

### (Sample 7; Example)

By setting the flow rate of the nitrogen gas to be 30 sccm, and the rest to be the same as the sample 4, the optical recording medium 10 having the structure illustrated in FIG. 1 was manufactured. This was regarded as a sample 7 of the optical recording medium 10.

### (Measurement and evaluation of reflectance and transmittance)

In each sample of the manufactured sample 4 to the manufactured sample 7, the reflectance and the transmittance of the recording layer 2 were measured in the same manner as the experiment 1.
The changes of the reflectance R and the transmittance T of the recording layer 2 based on the flow rate of the nitrogen gas (0 sccm to 30 sccm) when forming the recording layer 2 are illustrated in FIG. 5 as the measurement results. In addition, as the values of the case where the nitrogen gas is not allowed to flow (flow rate 0 sccm), the measurement values of the sample 1 illustrated in FIG. 4 are also illustrated in FIG. 5.

From FIG. 5, it can be seen that the transmittance is increased, and the reflectance is reduced, as the flow rate of the nitrogen gas (N2) is increased.
That is, it can be seen that it is easy to control both the reflectance and the transmittance of the recording layer 2 by changing the flow rate of the nitrogen gas.

Here, in each sample of the sample 1 in the experiment 1, and the sample 6 in the experiment 2 in the optical recording medium, the ratios of the three states of Pd, PdO, and PdO₂ were measured as the state of Pd atoms in the vicinity of the surface of the recording layer 2 by using XPS.
The measurement results are shown in Table 1.

**[Table 1]**

| Sample No. | Ar (sscm) | O₂ (sscm) | N₂ (sscm) | Pd (%) | PdO (%) | PdO₂ (%) |
|---|---|---|---|---|---|---|
| 1 | 70 | 30 | - | 0 | 75 | 25 |
| 6 | 70 | 30 | 10 | 0 | 80 | 20 |

As seen from Table 1, in the sample 6 in which the oxygen gas and the nitrogen gas have been allowed to flow, the ratio of PdO state is increased and the ratio of PdO₂ state is reduced in comparison with those of the sample 1 in which the oxygen gas is allowed to flow.
From the results, it is presumed that the reflectance and the transmittance of the recording layer, which have been difficult to be controlled based on only the flow rate of the oxygen gas, are controllable by allowing the nitrogen gas to flow.

Although each sample in the above-described experimental examples is used in the case where only the single-layered recording layer 2 is formed, also in the case where the two or more recording layers are formed, the reflectance and the transmittance of the recording layer are controllable by controlling the flow rate of the oxygen gas and the flow rate of the nitrogen gas.

In the case where the two or more recording layers are formed, the transmittance of the recording layer arranged closest to the light transmitting layer is preferably 60% or more. However, since the recording sensitivity is deteriorated when this transmittance of the recording layer is too high, the transmittance is preferably 90% or less. Also, the reflectance of the recording layer arranged closest to the light transmitting layer is preferably approximately 4% to 8% both inclusive.

As seen from the samples manufactured this time, in the case where the nitrogen gas is not allowed to flow (experiment 1), the favorable transmittance is obtained by increasing the flow rate of the oxygen gas, but the reflectance is high. When the flow rate of the oxygen gas is further increased to reduce the reflectance, since the transmittance is too high, the recording sensitivity is highly deteriorated, and a jitter is also deteriorated.

Meanwhile, in the case where the oxygen gas is sufficient, and the nitrogen gas is allowed to flow in addition (experiment 2), both the reflectance and the transmittance are easily controlled.
In the optical recording medium of the sample 7 in which the flow rate of the nitrogen gas was set to be 30 sccm, the transmittance of 65.4%, and the reflectance of 6.8% were obtained, and it could be seen that the recording layer (L1 layer) arranged on the light transmitting layer side in a Dual disk including the two recording layers had the favorable characteristics in.
In this optical recording medium of the sample 7, when the jitter of a third track in consecutive five tracks was measured in the same manner, the jitter of 4.6% was obtained at the bottom. That is, it could be seen that the optical recording medium had extremely favorable recording characteristics.

In this manner, it could be seen that formation of the recording layer by allowing the nitrogen gas to flow in addition to the oxygen gas was extremely effective for manufacturing the optical recording medium including the two or more recording layers.
Also, as seen from the above-described results, the jitter is also improved, and the formation of the recording layer by allowing the nitrogen gas to flow in addition to the oxygen gas is naturally effective in the case where the optical recording medium including only one recording layer is manufactured.

Invention is not limited to the above-described embodiments, but various other structures may be employed without departing from the scope of Invention.

## Claims

1. A method of manufacturing an optical recording medium including a recording layer formed on a substrate, and a light transmitting layer formed on the recording layer, comprising:
a step of forming the recording layer containing In and/or Sn, Pd, and oxygen through a use of sputtering method by using an In₂O₃ target and/or a SnO₂ target, and a Pd target while allowing an oxygen gas and a nitrogen gas to flow.

2. A method of manufacturing an optical recording medium including two or more recording layers formed on a substrate, an intermediate layer formed between each of the recording layers, and a light transmitting layer formed on the two or more recording layers, wherein
when forming at least the recording layer arranged closest to the light transmitting layer in the two or more recording layers, the recording layer containing In and/or Sn, Pd, and oxygen is formed through a use of sputtering method by using an In₂O₃ target and/or a SnO₂ target, and a Pd target while allowing an oxygen gas and a nitrogen gas to flow.

3. An optical recording medium comprising:
a substrate;
a recording layer formed on the substrate, containing In and/or Sn, Pd, and oxygen, and having an oxygen content higher than a stoichiometric composition of the case where In and/or Sn are completely oxidized; and
a light transmitting layer formed on the recording layer.

4. The optical recording medium according to claim 3, further comprising:
other one or more recording layers formed between the substrate and the recording layer; and
an intermediate layer formed between the recording layer and each of the other recording layers.

5. The optical recording medium according to claim 4, wherein the other recording layer contains In and/or Sn, Pd, and oxygen.
